# EUROPÄISCHE PATENTSCHRIFT

(11) **EP 3 886 068 B1**
(45) Veröffentlichungstag und Bekanntmachung des Hinweises auf die Patenterteilung: **11.06.2025**
(21) Anmeldenummer: 20164820.1
(22) Anmeldetag: 23.03.2020
(51) Int. Cl.: G08B 21/02, F16P 3/14, G08B 21/22

(54) **ÜBERWACHUNGSEINRICHTUNG UND EIN VERFAHREN ZUM BETRIEB EINER ÜBERWACHUNGSEINRICHTUNG**
MONITORING DEVICE AND METHOD FOR OPERATING SAME
DISPOSITIF DE SURVEILLANCE ET PROCÉDÉ DE FONCTIONNEMENT UN DISPOSITIF DE SURVEILLANCE

(43) Veröffentlichungstag der Anmeldung: 29.09.2021
(73) Patentinhaber: Leuze electronic GmbH + Co. KG, 73277 Owen/Teck (DE)
(72) Erfinder: Brunner, Rolf, 82223 Eichenau (DE); Jüttner, Andreas, 81543 München (DE); Eder, Alexander, 86928 Hofstetten (DE)
(74) Vertreter: Ruckh, Rainer Gerhard

(56) Entgegenhaltungen:
- EP-A1- 3 252 364
- EP-A1- 3 548 792
- EP-B1- 3 548 792

## Beschreibung

Die Erfindung betrifft eine Überwachungseinrichtung und ein Verfahren zum Betrieb einer Überwachungseinrichtung.

Bekannte Überwachungseinrichtungen umfassen typischerweise eine Sensoranordnung, die insbesondere als Sicherheits-Sensoranordnung ausgebildet ist, und damit für einen Einsatz im Bereich der Sicherheitstechnik geeignet ist. Die Sensoranordnung umfasst wenigstens einen Lichtvorhang, der typischerweise eine Reihenanordnung von Lichtstrahlen emittierenden Sendern in einem ersten Gehäuse und eine Reihenanordnung von Lichtstrahlen empfangenden Empfängern in einem zweiten Gehäuse aufweist.

Mit dem Lichtvorhang wird eine Überwachungsfunktion derart realisiert, dass in einer Auswerteeinheit des Lichtvorhangs die Empfangssignale der Empfänger ausgewertet werden und damit ein binäres Schaltsignal generiert wird, dessen Schaltzustände angeben ob ein Objekt in einem vom Lichtvorhang überwachten Schutzfeld vorhanden ist oder nicht. Wird ein Objekt im Schutzfeld detektiert, wird durch das dadurch generierte Schaltsignal eine Sicherheitsfunktion ausgelöst, beispielsweise eine mit dem Lichtvorhang überwachte, gefahrbringende Maschine oder Anlage stillgesetzt.

Ein typischer Anwendungsfall für eine derartige Sensoranordnung ist die Zugangsabsicherung zu einem Gefahrenbereich einer gefahrbringenden Maschine oder Anlage. Der Zugang zu dem Gefahrenbereich erfolgt über eine Fördereinheit, welche vom Lichtvorhang überwacht wird.

Die Überwachungsfunktion des Lichtvorhangs soll dann derart ausgebildet sein, dass ein Passieren von sicherheitskritischen Objekten, insbesondere Personen, vom Lichtvorhang erfasst wird, sodass zur Vermeidung von Gefahrensituationen die Sicherheitsfunktion ausgelöst wird.

Zulässige Objekte, das heißt allgemein nichtsicherheitskritische Objekte, wie zum Beispiel Werkstücke oder Ladegüter, die der Maschine oder Anlage zur Durchführung von Arbeitsprozessen zugeführt werden müssen, sollen jedoch nicht zur Auslösung der Sicherheitsfunktion führen, um unnötige Stillstandzeiten der Maschine oder Anlage zu vermeiden.

Um dies zu erreichen ist für die Sensoranordnung in bekannter Weise eine Mutingfunktion vorgesehen.

Beispielsweise können dem Lichtvorhang in Förderrichtung der Fördereinheit Mutingsensoren vorgeordnet sein, mit denen zulässige Objekte erfasst werden. Ist dies der Fall, wird die Überwachungsfunktion des Lichtvorhangs für eine vorgegebene Zeit gemutet, das heißt überbrückt, sodass die zulässigen Objekte den Lichtvorhang passieren können, ohne dass diese ein Schaltsignal, das die Sicherheitsfunktion auslöst, generiert.

Nachteilig hierbei ist, dass die Mutingsensoren als zusätzliche Sensoren den Installationsaufwand der Überwachungseinrichtung unerwünscht erhöhen. Weiterhin ist eine Synchronisation dieser Mutingsensoren und dem Lichtvorhang erforderlich.

Ein genereller Nachteil bei bekannten Muting-Verfahren besteht weiterhin darin, dass neben dem zulässigen Objekt im Schutzfeld Lücken entstehen können, sodass zum Beispiel eine Person neben dem zulässigen Objekt im Schutzfeld angeordnet sein kann. Die Aktivierung der Mutingfunktion stellt in diesem Fall eine nicht kontrollierte Gefahrensituation dar, da sich die Person oder allgemein ein sicherheitskritisches Objekt im Schutzfeld aufhält, ohne dass dadurch vom Lichtvorhang die erforderliche Sicherheitsfunktion ausgelöst wird.

Die WO 2019/154862 A1 betrifft eine Überwachungseinrichtung zur Überwachung eines Grenzbereichs einer Sicherheitszone. Die Überwachungseinrichtung umfasst einen Lichtvorhang zur Detektion eines Objekts an dem Grenzbereich. Zudem ist wenigstens ein Radarsensor vorgesehen, der Bewegungen von Objekten detektiert. Schließlich ist eine Auswerteeinheit vorgesehen, die abhängig von Signalen des Lichtvorhangs und des Radarsensors ein Ausgangssignal generiert. Insbesondere wird abhängig von Signalen des Lichtvorhangs und des Radarsensors eine Mutingfunktion realisiert.

Der Erfindung liegt die Aufgabe zugrunde die Funktionalität und die Sicherheit bei Gefahrenbereichsüberwachungen mittels einer Überwachungseinrichtung der eingangs genannten Art zu erhöhen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft demnach eine Überwachungseinrichtung mit einer Sensorik, welche zur Erfassung von Objekten in einem Überwachungsbereich ausgebildet ist, und mit einer Auswerteeinheit, welche zur Auswertung von Sensorsignalen der Sensorik ausgebildet ist. Die Überwachungseinrichtung bildet ein Sicherheitssystem zur Absicherung eines Gefahrenbereichs einer Anlage aus, und in der Auswerteeinheit wird nur dann eine Sicherheitsfunktion ausgelöst, wenn im Überwachungsbereich ein sicherheitskritisches Objekt erfasst wird. Als Sicherheitsfunktion wird dabei die Anlage stillgesetzt. Die Sensorik besteht ausschließlich aus Radarsensoren, wobei durch eine zeitaufgelöste Auswertung der Sensorsignale des oder der Radarsensoren nichtsicherheitskritische Objekte und sicherheitskritische Objekte unterschieden werden.

Die Erfindung betrifft weiterhin ein entsprechendes Verfahren.

Ein wesentlicher Vorteil der Erfindung besteht darin, dass mit dem oder den Radarsensoren sicherheitskritische Objekte eindeutig identifiziert und insbesondere von nichtsicherheitskritischen Objekten sicher unterschieden werden können.

Damit wird eine Sicherheitsfunktion nur dann generiert, wenn im Überwachungsbereich ein sicherheitskritisches Objekt detektiert wird, nicht jedoch wenn dort ein nichtsicherheitskritisches Objekt detektiert wird.

Damit wird einerseits eine hohe Sicherheit bei der Überwachungsfunktion der Überwachungseinrichtung erzielt, da sicherheitskritische Objekte wie zum

Beispiel Personen, die zu Gefahrensituationen führen, sicher erkannt werden und zur Auslösung der Sicherheitsfunktion führen. Dagegen wird ein unnötiges Auslösen der Sicherheitsfunktion bei Vorhandensein eines nichtsicherheitskritischen Objekts vermieden.

Diese Vorteile kommen insbesondere dann zum Tragen, wenn mit der Überwachungseinrichtung ein Gefahrenbereich einer Anlage abgesichert wird, wobei als Sicherheitsfunktion die Anlage stillgesetzt wird.

Dabei kann der Gefahrenbereich ein Materialübergabebereich sein.

Generell kann die Anlage auch als Maschine oder Roboter ausgebildet sein, wobei generell von der Anlage Gefahren insbesondere für Personen ausgehen können. Der Materialübergabebereich kann beispielsweise von einer Fördereinheit gebildet sein, mittels derer Transportgüter als nichtsicherheitskritische Objekte der Anlage zugeführt werden.

Mit der erfindungsgemäßen Überwachungseinrichtung wird eine hohe Sicherheit bei der Gefahrenbereichsüberwachung an der Anlage erreicht, da gefahrbringende Eingriffe von sicherheitskritischen Objekten sicher erfasst werden und zum Stillsetzen der Anlage führen, sodass dann von der Anlage keine Gefahren mehr ausgehen können.

Gleichzeitig wird die Verfügbarkeit der Anlage erhöht, da nichtsicherheitskritische Objekte mit den Radarsensoren als solche erfasst werden und damit nicht zu einem unnötigen Stillsetzen der Anlage führen.

Damit ergibt sich ein wesentlicher Vorteil der erfindungsgemäßen Überwachungseinrichtung dahingehend, dass mit dieser Mutingfunktionen realisiert werden können, ohne dass hierfür separate Mutingsensoren eingesetzt werden müssen. Die Radarsensoren der Überwachungseinrichtung können nicht nur die Sicherheitsfunktion zur Detektion von sicherheitskritischen Objekten erfüllen.

Vielmehr können diese eine Mutingfunktion auf einfache Weise dadurch realisieren, dass nichtsicherheitskritische Objekte als solche erfasst werden und nicht zur Auslösung der Sicherheitsfunktion führen. Bei einer Gefahrenbereichsüberwachung an einer Anlage können beispielsweise nichtsicherheitskritische Objekte im Materialübergabebereich, insbesondere auf einer Fördereinheit erkannt werden und durch das Unterdrücken der Sicherheitsfunktion ungehindert der Anlage zugeführt werden.

Gemäß einer vorteilhaften Ausführungsform der Erfindung werden mit den Radarsensoren Bewegungsprofile von Objekten ermittelt. Abhängig von den Bewegungsprofilen wird in der Auswerteeinheit eine Klassifikation der Objekte durchgeführt.

Zweckgemäß wird dabei abhängig von einem Bewegungsprofil eines Objekts dieses als nichtsicherheitskritisches Objekt oder als sicherheitskritisches Objekt klassifiziert, wobei nur bei Detektion eines sicherheitskritischen Objekts in der Auswerteeinheit die Sicherheitsfunktion ausgelöst wird.

Bei der erfindungsgemäßen Überwachungseinrichtung wird somit die Eigenschaft der Radarsensoren ausgenutzt, dass mit diesen genaue Bewegungen von Objekten, insbesondere auch die Richtung und Geschwindigkeit, erfasst werden können. Durch die Analyse der Art der Bewegungen können unterschiedliche Objekte klassifiziert werden. Bewegt sich beispielsweise eine Palette oder allgemein ein Transportgut auf einer Fördereinrichtung, so bewegt sich dieses gleichförmig. Eine solche gleichförmige Bewegung kann von nicht gleichförmigen Bewegungen, wie sie eine Person ausführt, sicher unterschieden werden.

Erfindungsgemäß werden durch eine zeitaufgelöste Auswertung der Sensorsignale des oder der Radarsensoren sich unterschiedliche bewegende Objekte, wie zum Beispiel Transportgüter und Personen oder allgemein nichtsicherheitskritische Objekte und sicherheitskritische Objekte, sicher unterschieden.

Generell basiert die Erkennung von Bewegungen von Objekten mittels eines Radarsensors auf dem Doppler-Effekt. Dabei wird die Frequenz eines ausgesendeten Radarsignals kontinuierlich über ein Frequenzband variiert und mit der Frequenz des vom Objekt zurückreflektierten Radarsignals verglichen. Durch den ermittelten Frequenzunterschied kann die Laufzeit des Radarsignals zu einem Objekt und zurück zum Radarsensor ermittelt werden, wodurch die Objektdistanz bestimmt wird.

Besonders vorteilhaft arbeitet der oder jeder Radarsensor nach dem FMCW (frequency modulated continuous wave) Verfahren.

Zweckmäßig emittiert der oder jeder Radarsensor Radarwellen im Frequenzbereich von 9 GHz bis 148,5 GHz. Das Frequenzband des Radarsensors kann dabei kleiner sein als der angegebene Frequenzbereich.

Generell sind natürlich auch andere vergleichbare Messverfahren einsetzbar.

Gemäß einer ersten Variante ist die Auswerteeinheit in dem oder in einem Radarsensor integriert.

Gemäß einer zweiten Variante bilden die Auswerteeinheiten und der oder die Radarsensoren jeweils separate Einheiten.

Diese Variante ist dann vorteilhaft, wenn die Überwachungseinrichtung mehrere Radarsensoren aufweist, die an eine gemeinsame Auswerteeinheit angeschlossen sind.

Gemäß einer vorteilhaften Ausgestaltung wird in der Auswerteeinheit abhängig von den Sensorsignalen des oder der Radarsensoren ein binäres Schaltsignal generiert, dessen Schaltzustände angeben, ob ein sicherheitskritisches Objekt im Überwachungsbereich vorhanden ist oder nicht, und dass abhängig vom Schaltsignal die Sicherheitsfunktion ausgelöst wird.

Beispielsweise kann das Schaltsignal der Auswerteeinheit an eine Steuereinheit ausgegeben werden, die eine zu überwachende gefahrbringende Anlage steuert. Die Steuereinheit kann dann eine Sicherheitsfunktion derart generieren, dass diese die Anlage stillsetzt.

Gemäß einer vorteilhaften Weiterbildung der Erfindung weist die Auswerteeinheit einen Steuereingang auf, über welchen Steuersignale von einer Steuerung einlesbar sind.

Dabei ist mit den Steuersignalen ein Zeitintervall vorgebbar, innerhalb dessen ein nichtsicherheitskritisches Objekt den Überwachungsbereich passiert.

Insbesondere sind die Steuersignale Mutingsignale.

Die Steuerung kann beispielsweise eine Fördereinheit steuern, wobei auf der Fördereinheit Transportgüter oder dergleichen als nichtsicherheitskritische Objekte transportiert werden, um sie einer gefahrbringenden Anlage zuzuführen. In der Steuerung ist die Fördergeschwindigkeit der Fördereinheit bekannt. Zudem sind in der Steuerung die Zeiten bekannt, wann die einzelnen nichtsicherheitskritischen Objekte der Anlage zugeführt werden. Damit ist in der Steuerung auch bekannt, wann die nichtsicherheitskritischen Objekte den von dem oder den Radarsensoren erfassten Überwachungsbereich passieren.

Somit können über die Steuerung Muting-Zeitintervalle vorgegeben werden, in denen die nichtsicherheitskritischen Objekte den Überwachungsbereich passieren. In diesen Muting-Zeitintervallen wird dann das Auslösen der Sicherheitsfunktion unterdrückt.

In diesem Fall können die Radarsensoren eine zusätzliche Muting-Überwachungsfunktion derart übernehmen, dass mit diesen überwacht wird, ob sich in einem Muting-Zeitintervall neben einem nichtsicherheitskritischen Objekt auch noch ein sicherheitskritisches Objekt im Überwachungsbereich aufhält. Ist dies der Fall, wird die Muting-Funktion sofort aufgehoben und die Sicherheitsfunktion ausgelöst.

Die Erfindung wird im Folgenden anhand der Zeichnungen erläutert. Es zeigen:
- Fig 1:: Schematische Darstellung eines Ausführungsbeispiels der erfindungsgemäßen Überwachungseinrichtung.
- Fig 2:: Schematische Darstellung eines Radarsensors für die Überwachungseinrichtung gemäß Figur 1.

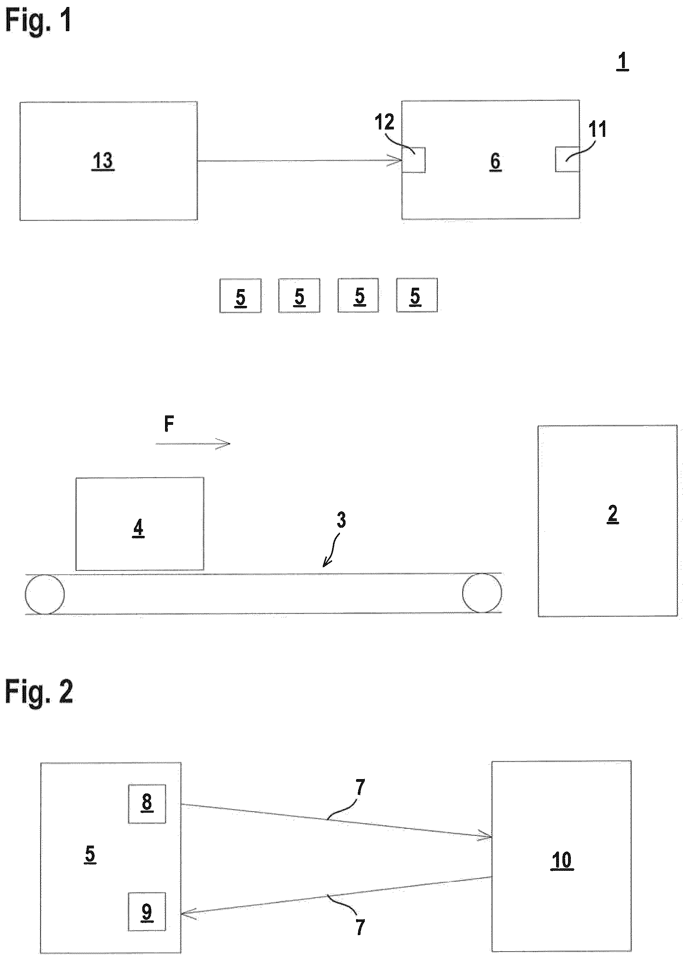

Figur 1 zeigt stark schematisiert ein Ausführungsbeispiel der erfindungsgemäßen Überwachungseinrichtung 1. Die Überwachungseinrichtung 1 dient im vorliegenden Fall zur Gefahrenbereichsabsicherung an einer Anlage 2, von der Gefahren für Personen ausgehen können. Eine Fördereinheit 3 bildet einen Materialübergabebereich, in welchem Transportgüter wie Paletten 4 der Anlage 2 zugeführt werden, damit die Anlage 2 Arbeitsvorgänge durchführen kann. Die Paletten 4, von welchen eine in Figur 1 dargestellt ist, werden mit einer Fördergeschwindigkeit F auf der Fördereinheit 3 gefördert. Die Fördereinheit 3 kann in Form eines Förderbands oder einer Rollenbahn ausgebildet sein.

Die Überwachungseinrichtung 1 umfasst eine Anzahl von Radarsensoren 5, die an eine Auswerteeinheit 6 angeschlossen sind. Die Überwachungseinrichtung 1 bildet ein Sicherheitssystem, das für den Einsatz im Bereich der Sicherheitstechnik ausgebildet ist. Hierzu weist die Überwachungseinrichtung 1 einen fehlersicheren Aufbau auf, was insbesondere durch einen redundanten Aufbau der Auswerteeinheit 6, beispielsweise in Form zweier sich zyklisch überwachenden Rechnereinheiten erreicht wird.

In Figur 1 sind vier Radarsensoren 5 dargestellt, die als Überwachungsbereich einen Bereich der Fördereinheit 3 überwachen.

Figur 2 zeigt schematisch den Aufbau eines Radarsensors 5. Der Radarsensor 5 weist einen Radarsignale 7 emittierenden Sender 8 und einen Empfänger 9, der von einem Zielobjekt 10 zurückreflektierende Radarsignale 7 empfängt auf.

Mit dem Radarsensor 5 können generell Bewegungen von Objekten erfasst werden.

Generell basiert die Erkennung von Bewegungen von Objekten mittels der oder eines Radarsensors 5 auf dem Doppler-Effekt. Dabei wird die Frequenz eines ausgesendeten Radarsignals 7 kontinuierlich über ein Frequenzband variiert und mit der Frequenz des vom Objekt zurückreflektierten Radarsignals 7 verglichen. Durch den ermittelten Frequenzunterschied kann die Laufzeit des Radarsignals 7 zu einem Objekt und zurück zum Radarsensor 5 emittiert werden, wodurch die Objektdistanz bestimmt wird.

Besonders vorteilhaft arbeitet der oder jeder Radarsensor 5 nach dem FMCW (frequency modulated continuous wave) Verfahren.

Zweckmäßig emittiert der oder jeder Radarsensor 5 Radarwellen im Frequenzbereich von 9 GHz bis 148,5 GHz. Das Frequenzband des Radarsensors kann dabei kleiner sein als der angegebene Frequenzbereich.

Die Sensorsignale der Radarsensoren 5 werden in der Auswerteeinheit 6 ausgewertet. Dabei werden anhand der Sensorsignale Bewegungsprofile von Objekten ermittelt und abhängig davon Objektklassifikationen derart durchgeführt, dass ermittelt wird, ob ein Objekt ein sicherheitskritisches Objekt oder ein nichtsicherheitskritisches Objekt ist. Ein auf der Fördereinheit 3 transportiertes Transportgut bewegt sich gleichförmig und wird demzufolge als nichtsicherheitskritisches Objekt klassifiziert. Eine Person dagegen bewegt sich nicht gleichförmig und wird damit als sicherheitskritisches Objekt klassifiziert.

Abhängig von dieser Auswertung wird in der Auswerteeinheit 6 ein binäres Schaltsignal generiert, das über einen Schaltausgang 11 ausgegeben wird. Die Schaltzustände des Schaltsignals geben an, ob sich ein sicherheitskritisches Objekt im Überwachungsbereich befindet oder nicht. Wird ein sicherheitskritisches Objekt detektiert, wird mit dem entsprechenden Schaltsignal eine Sicherheitsfunktion ausgelöst. Beispielsweise wird das Schaltsignal an eine die Anlage 2 steuernde Steuereinheit ausgegeben, wobei als Sicherheitsfunktion die Steuereinheit die Anlage 2 stillsetzt.

Bei Erfassung von nichtsicherheitskritischen Objekten wird dagegen keine Sicherheitsfunktion ausgelöst. Damit wird auf einfache Weise eine Muting-Funktion derart realisiert, dass nichtsicherheitskritische Objekte den Überwachungsbereich passieren können, ohne dass die Anlage 2 stillgesetzt wird.

Wie Figur 1 zeigt, weist die Auswerteeinheit 6 einen Steuereingang 12 auf. Über den Steuereingang 12 werden Steuersignale von einer Steuerung 13 eingelesen.

Die Steuerung 13 steuert im vorliegenden Fall die Fördereinheit 3. In der Steuerung 13 ist die Fördergeschwindigkeit F der Fördereinheit 3 bekannt. Zudem sind in der Steuerung 13 die Zeiten bekannt, wann die einzelnen nichtsicherheitskritischen Objekte der Anlage 2 zugeführt werden. Damit ist in der Steuerung 13 auch bekannt, wann die nichtsicherheitskritischen Objekte den von dem oder den Radarsensoren 5 erfassten Überwachungsbereich passieren.

Somit können über die Steuerung 13 Muting-Zeitintervalle vorgegeben werden, in denen die nichtsicherheitskritischen Objekte den Überwachungsbereich passieren. In diesen Muting-Zeitintervallen wird dann das Auslösen der Sicherheitsfunktion unterdrückt.

In diesem Fall können die Radarsensoren 5 eine zusätzliche Muting-Überwachungsfunktion derart übernehmen, dass mit diesen überwacht wird, ob sich in einem Muting-Zeitintervall neben einem nichtsicherheitskritischen Objekt auch noch ein sicherheitskritisches Objekt im Überwachungsbereich aufhält. Ist dies der Fall, wird die Muting-Funktion sofort aufgehoben und die Sicherheitsfunktion ausgelöst.

### Bezugszeichenliste

- (1): Überwachungseinrichtung
- (2): Anlage
- (3): Fördereinheit
- (4): Palette
- (5): Radarsensor
- (6): Auswerteeinheit
- (7): Radarsignal
- (8): Sender
- (9): Empfänger
- (10): Zielobjekt
- (11): Schaltausgang
- (12): Steuereingang
- (13): Steuerung

- F: Fördergeschwindigkeit

## Patentansprüche

1. Überwachungseinrichtung (1) mit einer Sensorik, welche zur Erfassung von Objekten in einem Überwachungsbereich ausgebildet ist, und mit einer Auswerteeinheit (6), welche zur Auswertung von Sensorsignalen der Sensorik ausgebildet ist, wobei die Überwachungseinrichtung (1) ein Sicherheitssystem zur Absicherung eines Gefahrenbereichs einer Anlage (2) ausbildet, und in der Auswerteeinheit (6) nur dann eine Sicherheitsfunktion ausgelöst wird, wenn im Überwachungsbereich ein sicherheitskritisches Objekt erfasst wird, wobei als Sicherheitsfunktion die Anlage (2) stillgesetzt wird, **dadurch gekennzeichnet, dass** die Sensorik ausschließlich aus Radarsensoren (5) besteht, wobei durch eine zeitaufgelöste Auswertung der Sensorsignale des oder der Radarsensoren (5) nichtsicherheitskritische Objekte und sicherheitskritische Objekte unterschieden werden.

2. Überwachungseinrichtung (1) nach Anspruch 1, **dadurch gekennzeichnet, dass** die Auswerteeinheit (6) in dem oder in einem Radarsensor (5) integriert ist.

3. Überwachungseinrichtung (1) nach Anspruch 1, **dadurch gekennzeichnet, dass** die Auswerteeinheit (6) und der oder die Radarsensoren (5) jeweils separate Einheiten bilden.

4. Überwachungseinrichtung (1) nach einem der Ansprüche 1 - 3, **dadurch gekennzeichnet, dass** der oder jeder Radarsensor (5) nach dem FMCW (frequency modulated continuous wave) Verfahren arbeitet.

5. Überwachungseinrichtung (1) nach einem der Ansprüche 1 - 4, **dadurch gekennzeichnet, dass** der oder jeder Radarsensor (5) Radarwellen im Frequenzbereich von 9 GHz bis 148,5 GHz emittiert.

6. Überwachungseinrichtung (1) nach einem der Ansprüche 1 - 5, **dadurch gekennzeichnet, dass** in der Auswerteeinheit (6) abhängig von den Sensorsignalen des oder der Radarsensoren (5) ein binäres Schaltsignal generiert wird, dessen Schaltzustände angeben, ob ein sicherheitskritisches Objekt im Überwachungsbereich vorhanden ist oder nicht, und dass abhängig vom Schaltsignal die Sicherheitsfunktion ausgelöst wird.

7. Überwachungseinrichtung (1) nach einem der Ansprüche 1 bis 6, **dadurch gekennzeichnet, dass** der Gefahrenbereich ein Materialübergabebereich ist.

8. Überwachungseinrichtung (1) nach einem der Ansprüche 1 bis 7, **dadurch gekennzeichnet, dass** mit den Radarsensoren (5) Bewegungsprofile von Objekten ermittelt werden, und dass abhängig von den Bewegungsprofilen in der Auswerteeinheit (6) eine Klassifikation der Objekte durchgeführt wird.

9. Überwachungseinrichtung (1) nach Anspruch 8, **dadurch gekennzeichnet, dass** abhängig von einem Bewegungsprofil eines Objekts dieses als nichtsicherheitskritisches Objekt oder als sicherheitskritisches Objekt klassifiziert wird, wobei nur bei Detektion eines sicherheitskritischen Objekts in der Auswerteeinheit (6) die Sicherheitsfunktion ausgelöst wird.

10. Überwachungseinrichtung (1) nach einem der Ansprüche 1 bis 9, **dadurch gekennzeichnet, dass** die Auswerteeinheit (6) einen Steuereingang (12) aufweist, über welchen Steuersignale von einer Steuerung (13) einlesbar sind.

11. Überwachungseinrichtung (1) nach Anspruch 10, **dadurch gekennzeichnet, dass** mit den Steuersignalen ein Zeitintervall vorgebbar ist, innerhalb dessen ein nichtsicherheitskritisches Objekt den Überwachungsbereich passiert.

12. Überwachungseinrichtung (1) nach Anspruch 11, **dadurch gekennzeichnet, dass** die Steuersignale Mutingsignale sind.

13. Verfahren zum Betrieb einer Überwachungseinrichtung (1) mit einer Sensorik, welche zur Erfassung von Objekten in einem Überwachungsbereich ausgebildet ist, und mit einer Auswerteeinheit (6), welche zur Auswertung von Sensorsignalen der Sensorik ausgebildet ist, wobei die Überwachungseinrichtung (1) ein Sicherheitssystem zur Absicherung eines Gefahrenbereichs einer Anlage (2) ausbildet, und wobei bei Erfassung eines sicherheitskritischen Objekts im Überwachungsbereich in der Auswerteeinheit (6) eine Sicherheitsfunktion ausgelöst wird, wobei als Sicherheitsfunktion die Anlage (2) stillgesetzt wird, **dadurch gekennzeichnet, dass** die Sensorik ausschließlich aus Radarsensoren (5) besteht, wobei durch eine zeitaufgelöste Auswertung der Sensorsignale des oder der Radarsensoren (5) nichtsicherheitskritische Objekte und sicherheitskritische Objekte unterschieden werden.

## Claims

1. A monitoring device (1) with a sensor system which is designed to detect objects in a monitoring area, and with an evaluation unit (6) which is designed to evaluate sensor signals from the sensor system, wherein the monitoring device (1) forms a safety system for safeguarding a danger area of an installation (2), and a safety function is only triggered in the evaluation unit (6) if a safety-critical object is detected in the monitoring area, wherein the installation (2) goes into standby mode as a safety function, if a safety-critical object is detected in the monitoring area, **characterised in that** the sensor system consists exclusively of radar sensors (5), whereby non-safety-critical objects and safety-critical objects are distinguished by a time-resolved evaluation of the sensor signals of the radar sensor or sensors (5).

2. A monitoring device (1) according to claim 1, **characterised in that** the evaluation unit (6) is integrated in said or in a radar sensor (5).

3. A monitoring device (1) according to claim 1, **characterised in that** the evaluation unit (6) and the radar sensor or sensors (5) each form separate units.

4. A monitoring device (1) according to one of claims 1-3, **characterised in that** said or each radar sensor (5) operates according to the FMCW (frequency modulated continuous wave) method.

5. A monitoring device (1) according to one of claims 1 - 4, **characterised in that** said or each radar sensor (5) emits radar waves in the frequency range from 9 GHz to 148.5 GHz.

6. A monitoring device (1) according to one of claims 1-5, **characterised in that** a binary switching signal is generated in the evaluation unit (6) as a function of the sensor signals of the radar sensor or sensors (5), the switching states of which indicate whether or not a safety-critical object is present in the monitoring area, and **in that** the safety function is triggered as a function of the switching signal.

7. A monitoring device (1) according to one of claims 1 to 6, **characterised in that** the danger zone is a material transfer zone.

8. A monitoring device (1) according to one of claims 1 to 7, **characterised in that** the radar sensors (5) are used to determine movement profiles of objects, and **in that** a classification of the objects is carried out in the evaluation unit (6) as a function of the movement profiles.

9. A monitoring device (1) according to claim 8, **characterised in that**, depending on a movement profile of an object, this is classified as a non-safety-critical object or as a safety-critical object, whereby the safety function is only triggered when a safety-critical object is detected in the evaluation unit (6).

10. A monitoring device (1) according to one of claims 1 to 9, **characterised in that** the evaluation unit (6) has a control input (12) via which control signals from a control unit (13) can be read in.

11. A monitoring device (1) according to claim 10, **characterised in that** the control signals can be used to preset a time interval within which a non-safety-critical object passes the monitoring area.

12. A monitoring device (1) according to claim 11, **characterised in that** the control signals are muting signals.

13. A method for operating a monitoring device (1) with a sensor system which is designed to detect objects in a monitoring area, and with an evaluation unit (6) which is designed to evaluate sensor signals from the sensor system, wherein the monitoring device (1) forms a safety system for safeguarding a danger area of an installation (2), and wherein a safety function is triggered in the evaluation unit (6) when a safety-critical object is detected in the monitoring area, wherein the system (2) goes into standby mode as a safety function, **characterised in that** the sensor system consists exclusively of radar sensors (5), wherein non-safety-critical objects and safety-critical objects are distinguished by a time-resolved evaluation of the sensor signals of the radar sensor or sensors (5).

## Revendications

1. Dispositif de surveillance (1) comprenant un système de capteurs conçu pour détecter des objets dans une zone de surveillance, et avec une unité d'évaluation (6) conçue pour évaluer les signaux de capteurs provenant du système de capteurs, dans lequel le dispositif de surveillance (1) forme un système de sécurité pour protéger une zone dangereuse d'une installation (2), et une fonction de sécurité n'est déclenchée dans l'unité d'évaluation (6) que si un objet critique pour la sécurité est détecté dans la zone de surveillance, l'installation (2) passe en mode veille en tant que fonction de sécurité, si un objet critique pour la sécurité est détecté dans la zone de surveillance, **caractérisée par le fait que** le système de capteurs se compose exclusivement de capteurs radar (5), les objets non critiques pour la sécurité et les objets critiques pour la sécurité étant distingués par une évaluation résolue dans le temps des signaux de capteur du ou des capteurs radar (5).

2. Dispositif de surveillance (1) selon la revendication 1, **caractérisé par le fait que** l'unité d'évaluation (6) est intégrée au capteur radar (5) ou bien à un capteur radar (5).

3. Dispositif de surveillance (1) selon la revendication 1, **caractérisé par le fait que** l'unité d'évaluation (6) et ledit ou les capteurs radar (5) forment chacun des unités séparées.

4. Dispositif de surveillance (1) selon l'une des revendications 1 à 3, **caractérisé par le fait que** ledit ou chaque capteur radar (5) fonctionne selon la méthode FMCW (ondes continues modulées en fréquence).

5. Dispositif de surveillance (1) selon l'une des revendications 1 à 4, **caractérisé par le fait que** ledit ou chaque capteur radar (5) émet des ondes radar dans la plage de fréquences allant de 9 GHz à 148,5 GHz.

6. Dispositif de surveillance (1) selon l'une des revendications 1 à 5, **caractérisé par le fait qu'**un signal de commutation binaire est généré dans l'unité d'évaluation (6) en fonction des signaux de capteur dudit ou des capteurs radar (5), dont les états de commutation indiquent si un objet critique pour la sécurité est présent ou non dans la zone de surveillance, et **par le fait que** la fonction de sécurité est déclenchée en fonction du signal de commutation.

7. Dispositif de surveillance (1) selon l'une des revendications 1 à 6, **caractérisé par le fait que** la zone dangereuse est une zone de transfert de matériaux.

8. Dispositif de surveillance (1) selon l'une des revendications 1 à 7, **caractérisé par le fait que** les capteurs radar (5) sont utilisés pour déterminer les profils de mouvement des objets, et **par le fait qu'**une classification des objets est effectuée dans l'unité d'évaluation (6) en fonction des profils de mouvement.

9. Dispositif de surveillance (1) selon la revendication 8, **caractérisé par le fait que**, selon le profil de mouvement d'un objet, celui-ci est classé comme un objet non critique pour la sécurité ou comme un objet critique pour la sécurité, la fonction de sécurité n'étant déclenchée que lorsqu'un objet critique pour la sécurité est détecté dans l'unité d'évaluation (6).

10. Dispositif de surveillance (1) selon l'une des revendications 1 à 9, **caractérisé par le fait que** l'unité d'évaluation (6) possède une entrée de commande (12) par laquelle les signaux de commande d'une unité de commande (13) peuvent être lus.

11. Dispositif de surveillance (1) selon la revendication 10, **caractérisé par le fait que** les signaux de commande peuvent être utilisés pour prédéfinir un intervalle de temps au cours duquel un objet non critique pour la sécurité passe dans la zone de surveillance.

12. Dispositif de surveillance (1) selon la revendication 11, **caractérisé par le fait que** les signaux de commande sont des signaux d'inhibition.

13. Procédé de fonctionnement d'un dispositif de surveillance (1) doté d'un système de capteurs conçu pour détecter des objets dans une zone de surveillance et d'une unité d'évaluation (6) conçue pour évaluer les signaux des capteurs du système de capteurs, dans lequel le dispositif de surveillance (1) forme un système de sécurité pour protéger une zone dangereuse d'une installation (2), et dans lequel une fonction de sécurité est déclenchée dans l'unité d'évaluation (6) lorsqu'un objet critique pour la sécurité est détecté dans la zone de surveillance, et dans lequel une fonction de sécurité est déclenchée dans l'unité d'évaluation (6) lorsqu'un objet critique pour la sécurité est détecté dans la zone de surveillance, l'installation (2) passant en mode veille en tant que fonction de sécurité, **caractérisée par le fait que** le système de capteurs est constitué exclusivement de capteurs radar (5), les objets non critiques pour la sécurité et les objets critiques pour la sécurité étant distingués par une évaluation résolue dans le temps des signaux de capteur du ou des capteurs radar (5).
